# EUROPEAN PATENT SPECIFICATION

(11) **EP 2 524 996 B1**
(45) Date of publication and mention of the grant of the patent: **31.03.2021**
(21) Application number: 12466009.3
(22) Date of filing: 07.05.2012
(51) Int. Cl.: E02F 9/20, E02F 9/08, E02D 3/02, E01C 19/23, B60K 11/02, B60K 11/06

(54) **Engine cooling unit for an earth working machine**
Motorkühlvorrichtung für eine Erdbewegungsmaschine
Unité de refroidissement du moteur d'un engin de terrassement

(30) Priority: 18.05.2011 CZ 20110302
(43) Date of publication of application: 21.11.2012
(73) Proprietor: Ammann Czech Republic a.s., 549 01 Nové Mesto nad Metuji (CZ)
(72) Inventor: Jirman, Bohumil, Nove Mesto nad Metuji, 549 01 (CZ)
(74) Representative: Pavlica, Tomas

(56) References cited:
- WO-A1-2009/142555
- DE-U1- 29 805 539
- FR-A1- 2 218 474
- JP-A- 2005 139 952
- US-A- 4 382 481
- US-A1- 2002 000 342

## Description

### Field of the Invention

The invention relates to a low speed earth working machine with a drive unit that includes a liquid-cooled internal combustion engine, such as for example compaction rollers, etc., especially to high performance earth working machines, but with a slow running speed, without the possibility of ram air cooling.

### Background of the Invention

The earth working machines, normally moving at a top speed around 10 km/h and lower, very often encounter the need for high power in the orders of up to hundreds of kW, what sets both the need of high demands on cooling performance to be proportional to the engine output and simultaneously, it prevents cooling of the engine by ram air due to the low speeds. In addition, in these machines, the engine is very often situated behind the cabin, while the machine is moving forward and backward at work, for example when rolling of a laid bituminous carpet. Any cooling of the combustion engine is necessary to be carried out with the help of fans.

In addition, due to increasing demands for higher power of the drive units for these machines, supercharging of such internal combustion engines by a turbocharger with an intercooler of the intake air is mostly used currently, what allows for increased internal combustion engine power, but it also increases the demands for cooling of the whole machine.

In the earth working machines the cooling systems are usually designed as one whole and they comprise more separated coolers, whose number is given by the number of the cooling circuits of the machine, wherein the primary cooling circuit is the engine cooling circuit. Further it can also be for example an oil cooling circuit, air conditioning cooling circuit, intercooler of the intake air, etc. The entire cooling system is provided with one common fan, which ensures airflow through all coolers. The fan of the cooling system of the machine is either firmly attached to the driving internal combustion engine, or its driving is provided separately from the internal combustion engine of the machine, and preferably it is connected to a separate engine of the cooling system of the machine, for example to an independent, hydrostatic, controlled, or eventually uncontrolled drive, etc.

In the most of the earth working machines, the coolers are situated in front of the engine compartment, and the cooling system fan draws air for cooling from the area behind a machine cabin, so that the air passes through all coolers at first, then leaves the machine to the outside through holes in the rear bonnet of the machine, and withdraws so the heat from the engine compartment at the same time. In other earth working machines, the fan with a cooling system is situated in the rear part of the machine, behind the engine, and the fan draws cooling air through the engine compartment of the machine. However, temperature of the intake air greatly increases during passing through the engine compartment, so that the cooling system of the machine has to be rated for a much higher cooling capacity than as it is in the first case. In consequence of larger coolers, the space requirements for installation of such a cooling system into the engine compartment are growing. A big disadvantage of this solution is that due to an increase in air temperature, caused by its passing through the engine compartment, the temperature of the cooling air passing through coolers increases, and thereby, both the power increase gained by supercharging is decreased and the temperature of the cooling medium sucked into the condenser of an air condition system is increased, what greatly increases the pressure ratios in this circuit. After passing through all coolers of the machine, the cooling air is taken off rearwards through the holes in the bonnet. A less used solution, used in some machines, is that the cooling system is located as a common unit in the rear part of the machine with suction of the cooling air through side holes in the bonnet, the machine frame, and with an independent hydrostatic drive of the fan. The engine compartment is separated from the cooling system of the machine by a partition. The cooling air passes through the cooler and it is taken away rearwards through the holes in the bonnet. In this solution, due to overheating of the engine, a further independent fan is used for taking away of the heat from the engine compartment. The disadvantage of this solution is a heated air from the cooler going through the engine compartment The preamble of independent claim 1 is based on US4382481.

### Summary of the Invention

The solution to the underlying problem is provided by an earth working machine as defined in independent claim 1. According to this invention, a low speed earth working machine with a drive unit that includes a liquid-cooled internal combustion engine is provided, which eliminates the above-mentioned disadvantages. The low speed earth working machine has an internal combustion engine situated in an engine compartment with a bonnet, and is fitted with a main cooler for cooling of the cooling liquid of the internal combustion engine and with at least one auxiliary cooler, which is for example an intercooler of air for supercharging, an oil cooler, a cooler for air conditioning, etc., wherein the main cooler is provided with a first fan and is situated separately from the engine compartment. The subject of the invention is in that there is a common air suction space provided between the engine compartment and the main cooler, which space is designed for sucking air from the outside of the earth working machine, the common suction space comprises a first partition, situated to separate the common suction space from the engine compartment, and a second partition, at which the main cooler is situated, while the auxiliary cooler is situated at the first partition, wherein the first fan of the main cooler is arranged for suction of the cooling air from the common suction space and for its guiding to the outside of the machine through said main cooler, the auxiliary cooler is fitted with the second fan, which is also arranged for sucking the cooling air from the common suction space and for its guiding through the auxiliary cooler and the engine space to the outside of the machine. Especially advantageous is when the first partition reliably separates the common suction space from the engine compartment to prevent sucking of hot air from the engine compartment into the common suction space. Likewise, it is advantageous to have the common suction space separated by a second partition reliably from the space behind the main cooler, in which there is air heated by passing through the main cooler, whereby maximum cooling efficiency is also ensured. For the purposes of this application, the common suction area is understood to be the space into which air is sucked from the vicinity of the earth working machine, and from which the air is supplied to the main cooler and to the auxiliary cooler and the engine compartment. It is particularly advantageous if no already heated air leaks into the suction space from the engine compartment or from the space behind the main cooler. However, it is obviously possible to design a common suction space with controlled suction of the heated air, e.g. from the engine compartment, if required by the application, for example due to work at very low temperatures, etc. But due to the expected principal use of the earth working machines under normal conditions, this solution will not be further specified in detail, although it is not excluded from the scope of protection in any way.

The common suction space can be formed for example by sealing of the first and the second partitions against the housing of the common suction space. The housing may be formed for example by the bonnet of the engine compartment, which bonnet covers also the common suction space, and the housing may be joined with a cover of the main cooler, but it may be also designed as a separate box. To ensure the lowest intake air temperature and thereby to maximize the cooling effect, holes are formed in the sides of the housing and/or from above. This ensures that the air is sucked through said holes from the space surrounding the housing and not from the engine compartment or from the space behind the main cooler. There are many possible variants of forming a common suction space so that the lowest possible temperature of the intake air is ensured, and thereby the best cooling. Such variants will be easily appreciated by any common designer of the earth moving machinery with internal combustion engines or by any common designer of the internal combustion engines. Therefore, they will not be described here in greater detail.

According to one preferred embodiment, the main cooler is integrated into the second partition. In this case, it is particularly suitable to ensure separation of the common suction space from the area behind the main cooler to prevent backward sucking of the already used air, which air was warmed by passing through the main cooler. Also, the auxiliary cooler may be integrated into the first partition, in which case similar requirements to prevent the intake of the heated air from the engine compartment apply.

As it is clear to a man skilled in the art, the internal combustion engine is equipped with an exhaust system, which includes devices for reducing the content of pollutants in the exhaust flue gas at present, also known as the aftertreatment. However, this will not be discussed here because the exhaust system is not important for the substance of this invention. Apart from the exhaust flue gas aftertreatment, the flue gas exhaust system often comprises a turbocharger to increase the volume of intake air, thus increasing the engine power. Mostly, the so-called supercharging is then provided with an intake air intercooler, whereby the amount of air delivered to the cylinders is further increased and thereby the power is even more increased. In a particular preferred embodiment, the auxiliary cooler is an air intercooler of the engine, which intercooler is provided with a separate fan, in this case, the second fan. The second fan can be suitably connected to the engine shaft, and so cooling proportional to the rotation speed of the engine is secured, i.e. at high rotation speeds, when the highest power is required, the fan rotation speed is also high, while at low rotation speeds, when the power is not required, the fan rotation speed, and thus the cooling by the air in the intercooler, is low. Here, it is important to realize that in the arrangement according to the invention, the second fan of the auxiliary cooler provides sucking of the warm air from the engine compartment, what further helps in cooling of the engine. Therefore, it is necessary to ensure that the air exhausted by the second fan from the common suction space via the auxiliary cooler into the engine compartment passes out of the engine compartment to the outside. Again, some technical solution how to ensure exhausting of the heated air from the engine compartment can be designed by any average designer, so here it will not be described in greater detail.

According to another preferred embodiment, the first fan of the main cooler is driven by an independent drive to ensure cooling of the engine depending on the temperature of the combustion engine. The first fan can be driven by an electric motor, hydraulically, etc.

### Brief Description of the Drawings

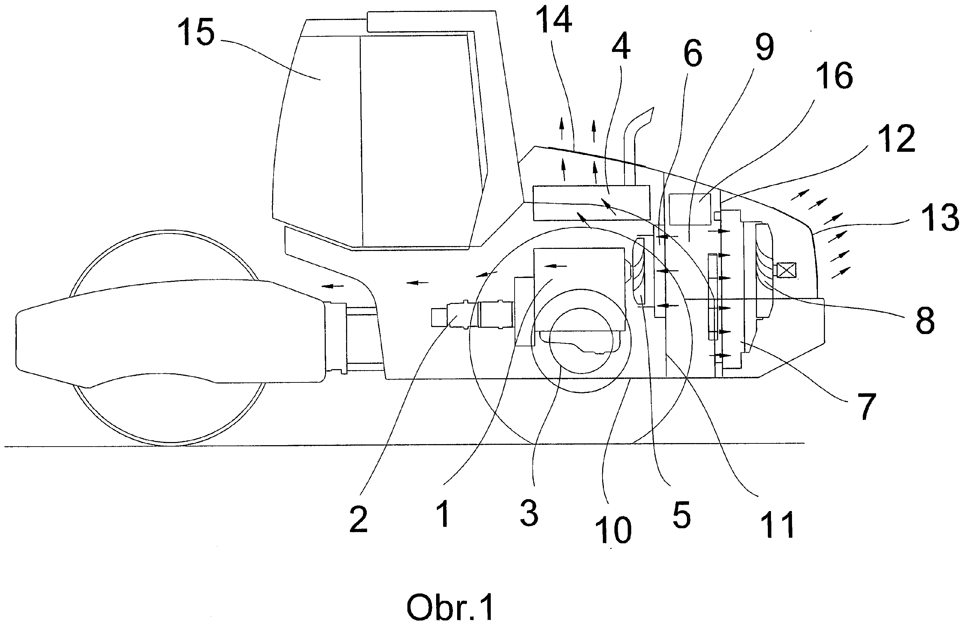

The invention will be more clearly understood from the following example of its embodiment, which example is illustrated in the accompanying drawing, where Figure 1 shows a schematic side view of the earth working machine, in this case of a compaction roller.

### Examples of the embodiment

Figure 1 shows a compacting roller as an example of an earth working machine. This machine is equipped with an internal combustion engine 1 arranged in an engine compartment with a bonnet. The machine is further equipped with a hydraulic system 2 and terminal units 3 for forward and backward movement of the machine. An exhaust system 4 for guiding the flue gases out from the combustion engine 1 is connected to the internal combustion engine 1, but the actual connection is not shown here. Apart from the usual devices for reducing pollutant content in the flue gas, what is a process called the aftertreatment, the exhaust system 4 in this example of the embodiment comprises also a not shown supercharger for supercharging the engine with the intake air to increase the engine power. The supercharging of air comprises an intercooler for the greatest possible increase in the volume of air that is delivered into the cylinders of the internal combustion engine 1, whereby the already described increase in power of this engine is achieved, what moreover is a known common practice. The cooling system of the earth working machine in this example of embodiment comprises apart from the already described air intercooler also a main cooler 7 provided with a hydraulically driven fan 8, wherein the rotation speed of the fan 8 is not dependent on the rotation speed of the engine 1.

The drive unit for an earth working machine according to the invention comprises a common suction space 9 of the machine cooling system, which space 9 is defined by a first partition /wall/11, a second partition /wall/ 12, which partitions 11, 12 are fixed to the rear frame 10 of the machine in this embodiment, and on sides it is defined by the bonnet 13 of the machine. The first partition 11 and the second partition 12 are sealed in the bonnet 13 to prevent undesirable sucking of the cooling air both from the engine compartment and from the rear space, in which space the main cooler 7 is placed, so as it will be described below. So the cooling air enters the common suction space 9 only through the holes 16 in the sides and through the not shown holes in the bonnet from above. This ensures that the cooling air is sucked only from the vicinity of the machine so that it has the lowest temperature.

An auxiliary cooler 6, here an intake air intercooler for supercharging provided with a second fan 5, is attached to the first partition 11 in the engine compartment. In the first partition, a hole is formed, which hole ensures sufficient air flow through the auxiliary cooler 6, wherein their connection is sealed to prevent the already described undesirable air intake into the common suction space 9 from the engine compartment. In this embodiment, the second fan 5 is joined with the output shaft of the internal combustion engine 1 for driving of the second fan 5 directly by the internal combustion engine 1, whereby both a driving unit of the fan 5 is saved and it is ensured that the rotation speed of the second fan 5 is proportional to the rotational speed of the internal combustion engine 1. But it is also possible to provide the second fan 5 with an independent motor.

Apart from the main cooler 7 and the intercooler 6, the cooling system of the engine 1 may eventually comprise also other coolers, e.g. an oil cooler of the auxiliary hydraulic circuits, or a cooler of the air conditioning, etc. These coolers are not shown in Figure 1, but they can be situated both in the part behind the main cooler 7 and in front of the intercooler 6 to ensure air passage from the common suction space 9 also through these coolers. Further, air is exhausted from the common suction space 9 of the cooling system via the coolers of the engine 1, wherein the minor part of the air passes through the auxiliary cooler 6 in the direction to the engine space and from this space through the respective holes to the outside, and doing so, it takes away the heat from the engine, whereby an independent fan providing taking away of the heat from the engine space is so spared. The air is discharged through the holes 14 in the upper part of the bonnet 13, and eventually also under the cabin 15, to the outside, off the machine. The major part of the air passes through the main cooler 7, through the grilles of the bonnet 13 rearwards. The fan 5 of the auxiliary cooler 6, here of the air intercooler, has the same rotation speed as is that of the internal combustion engine 1 and so the cooling performance of the air intercooling of the engine 1 is preferably proportional to the engine speed. The first fan 8 of the main cooler 7 is provided with an independent drive with variable rotational speed, which speed is controlled according to the actual cooling fluid temperature. The temperature increases in dependence on the load of the internal combustion engine 1, but also in dependence on the external temperature, etc. However, the first fan 8 switching requirements are mostly different from those regarding the engine air intercooling. At low load and in cold weather, the speed of the fan 8 can be low, whereby the power loss necessary for the machine cooling is decreased. The first fan 8 is switched on in accordance with the actual temperature of the cooling liquid.

The common suction space 9 preferably serves also as a source of intake air for the engine, wherein the air passes through a not shown air filter of the engine via a turbocharger into an intercooler and further into the suction of the cylinders of an internal combustion engine 1. According to another example of an embodiment according to the invention the internal combustion engine does not comprise any supercharging, but only oil cooler for hydraulic circuits. In this example of embodiment of the invention, the oil cooler of the hydraulic circuits is situated behind the first partition as the auxiliary cooler.

It is important to realize that the above described examples of embodiments only illustrate the possible embodiments of the invention and should not be considered as a limitation, and the invention should be limited by the wording of claims only.

Industrial Use: The invention is particularly usable for earth working machines.

## Claims

1. Earth working machine with a slow running speed with a drive unit that includes a liquid-cooled internal combustion engine (1), wherein the liquid cooled internal combustion engine (1) is arranged in an engine compartment with a bonnet (13), and is provided with a main cooler (7) for cooling the cooling liquid of the internal combustion engine (1) and at least one auxiliary cooler (8), which is e.g. an intercooler of air for supercharging, an oil cooler, a cooler for air conditioning, etc., wherein the main cooler (7) is provided with a first fan (8) and is arranged separately from the engine compartment, **characterized by** a common air suction space (9) arranged between the engine compartment and the main cooler, said common air suction space (9) being designed for drawing a cooling air from the outside of the engine compartment through holes being arranged in sides and in a top side of the bonnet to ensure the lowest temperature of the cooling air sucked into the common air suction space (9), said common air suction space (9) comprises a first partition (11) separating the common air suction space (9) from the engine compartment, and a second partition (12), at which the main cooler (7) is arranged, the first fan (8) is driven by an independent drive to draw the cooling air from the common air suction space (9), running said cooling air through the main cooler (7) and pushing it out to the outside of the machine , wherein the auxiliary cooler (6) is provided with a second fan (5) arranged for drawing the cooling air from the common air suction space (9), running said cooling air through the auxiliary cooler (6) and through the engine compartment to the outside of the machine.

2. Earth working machine according to claim 1, **characterized in that** the auxiliary cooler (6) is an intercooler of air, wherein the second fan (5) is connected to the internal combustion engine (1) for driving the fan (5) in relation to the rotational speed of the internal combustion engine (1).

3. Earth working machine according to claims 1 or 2, **characterized in that** the main cooler (7) is arranged in the second wall (12) of the common suction space (9) and the first fan (8) is arranged behind the main cooler (7) of the cooling liquid for exhausting of air from the common suction space (9) via the main cooler (7) rearwards of it.

4. Earth working machine according to anyone of claims 1 to 3, **characterized in that** the auxiliary cooler (6) is arranged in the first wall (11) of the common suction space (9) and the second fan (5) is arranged in the engine compartment.

5. Earth working machine according to anyone of claims 1 to 4, **characterized in that** the common suction space (9) is completely sealed against leaking the air from the engine compartment and/or from the space behind the main cooler (7).

6. Earth working machine according to anyone of claims 1 to 5, **characterized in that** the common suction space is formed by sealing of the first and the second partitions (11, 12) against the bonnet (13) that bears on them.

7. Earth working machine according to anyone of claims 1 to 5, **characterized in that** the common suction space (9) is formed as a separate box provided with holes on a side and/or on top for air input into it from the space outside the machine.

## Patentansprüche

1. Erdarbeitsmaschine mit langsamen Laufgeschwindigkeit, mit einer Antriebseinheit, die einen flüssigkeitsgekühlten Verbrennungsmotor (1) enthält, wobei der flüssigkeitsgekühlte Verbrennungsmotor (1) in einem Motorraum mit einer Motorhaube (13) angeordnet und mit einem Hauptkühler (7) zum Kühlen der Kühlflüssigkeit des Verbrennungsmotors (1) und mit mindestens einem Hilfskühler (6) versehen ist, der z.B. ein Ladeluftkühler zum Aufladen des Luft, ein Ölkühler, ein Kühler zum Klimatisieren usw. ist, wobei der Hauptkühler (7) mit einem ersten Lüfter (8) versehen und getrennt vom Motorraum angeordnet ist, **gekennzeichnet durch** einen gemeinsamen Luftsaugraum (9), der zwischen dem Motorraum und dem Hauptkühler angeordnet ist, wobei der gemeinsame Luftsaugraum (9) zum Ansaugen einer Kühlluft von der Außenseite des Motorraums mit einer Motorhaube (13) durch Löcher vorgesehen ist, die in den Seiten und in der Oberseite der Motorhaube angeordnet sind, um die niedrigste Temperatur der Kühlluft sicherzustellen, die in den gemeinsamen Luftsaugraum (9) gesaugt wird, und der gemeinsame Luftsaugraum (9) eine erste Trennwand (11) enthält, die den gemeinsamen Luftsaugraum (9) von dem Motorraum trennt, und eine zweite Trennwand (12) aufweist, an der der Hauptkühler (7) angeordnet ist, wobei der erste Lüfter (8) von einem unabhängigen Antrieb für Ansaugen der Kühlluft aus dem gemeinsamen Luftsaugraum (9) angetrieben ist, wobei die Kühlluft durch den Hauptkühler (7) strömt und nach außen an die Außenseite der Maschine herausdrückt wird, wobei der Hilfskühler (6) mit einem zweiten Lüfter (5) versehen ist, der zum Ansaugen der Kühlluft aus dem gemeinsamen Luftsaugraum (9) angeordnet ist, wobei die Kühlluft durch den Hilfskühler (6) und durch den Motorraum an die Außenseite der Maschine strömt.

2. Erdarbeitsmaschine nach Anspruch 1, **dadurch gekennzeichnet, dass** der Hilfskühler (6) ein Zwischenkühler der Luft ist, wobei der zweite Lüfter (5) mit einem Verbrennungsmotor (1) zum Antreiben des Lüfters (5) im Verhältnis zur Drehzahl des Verbrennungsmotors (1) verbunden ist.

3. Erdarbeitsmaschine nach Anspruch 1 oder 2, **dadurch gekennzeichnet, dass** der Hauptkühler (7) in der zweiten Wand (12) des gemeinsamen Saugraums (9) und der erste Lüfter (8) hinter dem Hauptkühler (7) der Kühlflüssigkeit für das Absaugen der Luft aus dem gemeinsamen Luftsaugraum (9) über den Hauptkühler (7) dahinter angeordnet sind .

4. Erdarbeitsmaschine nach einem der Ansprüche 1 bis 3, **dadurch gekennzeichnet, dass** der Hilfskühler (6) in der ersten Wand (11) des gemeinsamen Saugraums (9) und der zweite Lüfter (5) in dem Motorraum angeordnet sind.

5. Erdarbeitsmaschine nach einem der Ansprüche 1 bis 4, **dadurch gekennzeichnet, dass** der gemeinsame Saugraum (9) vollständig gegen das Austreten von Luft aus dem Motorraum und/oder aus dem Raum hinter dem Hauptkühler (7) abgedichtet ist.

6. Erdarbeitsmaschine nach einem der Ansprüche 1 bis 5, **dadurch gekennzeichnet, dass** der gemeinsame Saugraum durch Abdichten der ersten und der zweiten Trennwand (11, 12) gegen die auf diese Wände aufliegende Motorhaube (13) gebildet ist.

7. Erdarbeitsmaschine nach einem der Ansprüche 1 bis 5, **dadurch gekennzeichnet, dass** der gemeinsame Saugraum (9) als ein separater Kasten ausgebildet ist, der mit seitlichen Öffnungen und/oder mit oben angeordneten Öffnungen zum Eintritt der Luft von der Außenseite der Maschine versehen ist.

## Revendications

1. Engin de terrassement à vitesse de marche lente ayant une unité d'entraînement qui comprend un moteur à combustion interne refroidi par liquide (1), le moteur à combustion interne refroidi par liquide (1) étant disposé dans un compartiment moteur ayant un capot (13), et comportant un refroidisseur principal (7) pour refroidir le liquide de refroidissement du moteur à combustion interne (1) et au moins un refroidisseur auxiliaire (8) qui est, par exemple, un refroidisseur intermédiaire d'air de suralimentation, un refroidisseur d'huile, un refroidisseur de climatisation, etc., le refroidisseur principal (7) comportant un premier ventilateur (8) et étant disposé séparément du compartiment moteur, **caractérisé par** un espace d'aspiration d'air commun (9) ménagé entre le compartiment moteur et le refroidisseur principal, ledit espace d'aspiration d'air commun (9) étant conçu pour aspirer un air de refroidissement provenant de l'extérieur du compartiment moteur à travers des trous disposés dans des côtés et dans un côté supérieur du capot pour garantir la température la plus basse de l'air de refroidissement aspiré dans l'espace d'aspiration d'air commun (9), ledit espace d'aspiration d'air commun (9) comprenant une première cloison (11) séparant l'espace d'aspiration d'air commun (9) vis-à-vis du compartiment moteur, et une seconde cloison (12) à laquelle est disposé le refroidisseur principal (7), le premier ventilateur (8) étant entraîné par un entraînement indépendant pour aspirer l'air de refroidissement à partir de l'espace d'aspiration d'air commun (9), faisant circuler ledit air de refroidissement à travers le refroidisseur principal (7) et poussant celui-ci jusqu'à l'extérieur de l'engin, le refroidisseur auxiliaire (6) comportant un second ventilateur (5) agencé pour aspirer l'air de refroidissement à partir de l'espace d'aspiration d'air commun (9), faisant circuler ledit air de refroidissement à travers le refroidisseur auxiliaire (6) et à travers le compartiment moteur jusqu'à l'extérieur de l'engin.

2. Engin de terrassement selon la revendication 1, **caractérisé par le fait que** le refroidisseur auxiliaire (6) est un refroidisseur intermédiaire d'air, le second ventilateur (5) étant relié au moteur à combustion interne (1) pour entraîner le ventilateur (5) en liaison avec la vitesse de rotation du moteur à combustion interne (1).

3. Engin de terrassement selon la revendication 1 ou 2, **caractérisé par le fait que** le refroidisseur principal (7) est disposé dans la seconde cloison (12) de l'espace d'aspiration commun (9) et le premier ventilateur (8) est disposé derrière le refroidisseur principal (7) du liquide de refroidissement pour une évacuation d'air depuis l'espace d'aspiration commun (9) par l'intermédiaire du refroidisseur principal (7) vers l'arrière de celui-ci.

4. Engin de terrassement selon l'une quelconque des revendications 1 à 3, **caractérisé par le fait que** le refroidisseur auxiliaire (6) est disposé dans la première cloison (11) de l'espace d'aspiration commun (9) et le second ventilateur (5) est disposé dans le compartiment moteur.

5. Engin de terrassement selon l'une quelconque des revendications 1 à 4, **caractérisé par le fait que** l'espace d'aspiration commun (9) est entièrement scellé vis-à-vis de fuite d'air du compartiment moteur et/ou de l'espace derrière le refroidisseur principal (7).

6. Engin de terrassement selon l'une quelconque des revendications 1 à 5, **caractérisé par le fait que** l'espace d'aspiration commun est formé par scellement des première et seconde cloisons (11, 12) contre le capot (13) qui repose sur celles-ci.

7. Engin de terrassement selon l'une quelconque des revendications 1 à 5, **caractérisé par le fait que** l'espace d'aspiration commun (9) est réalisé sous la forme d'une boîte distincte comportant des trous sur un côté et/ou sur le dessus pour une entrée d'air dans celle-ci depuis l'espace à l'extérieur de l'engin.
